# EUROPEAN PATENT APPLICATION

(11) **EP 4 813 269 A1**
(43) Date of publication of application: **30.09.2026**
(21) Application number: 24917323.8
(22) Date of filing: 13.12.2024
(51) Int. Cl.: A47L 9/28, G06N 3/045, G06N 3/049, G06N 5/04, G05D 1/648, G05D 105/10

(54) **CLEANER OPERATING ACCORDING TO FLOOR CHARACTERISTICS AND OPERATING METHODS THEREOF**

(30) Priority: 08.01.2024 KR 20240003035; 05.04.2024 KR 20240046765
(71) Applicant: Samsung Electronics Co., Ltd., Suwon-si, Gyeonggi-do 16677 (KR)
(72) Inventor: HAHM, Seongil, Suwon-si Gyeonggi-do 16677 (KR); KANG, Pilseop, Suwon-si Gyeonggi-do 16677 (KR); YUN, Jeonghyeon, Suwon-si Gyeonggi-do 16677 (KR); LEE, Bokyung, Suwon-si Gyeonggi-do 16677 (KR); LEE, Sanghyun, Suwon-si Gyeonggi-do 16677 (KR); JO, Eunae, Suwon-si Gyeonggi-do 16677 (KR)
(74) Representative: Appleyard Lees IP LLP
(86) International application number: PCT/KR2024/020309
(87) International publication number: WO 2025/150728

(57) **Abstract**

This cleaner comprises: a suction module; a memory storing a plurality of artificial intelligence models; and a processor, wherein the processor identifies at least one operation section corresponding to state data among a plurality of operation sections, identifies floor characteristics by using an artificial intelligence model corresponding to the identified operation section among the plurality of artificial intelligence models, and adjusts a driving state of the suction module on the basis of the identified floor characteristics.

## Description

### [Technical Field]

The disclosure relates to a cleaner that identifies characteristics of a floor on which a cleaning job is performed and operates in accordance thereto, and methods thereof.

### [Background Art]

Fueled by development of electronic technologies, various types of cleaners are being used in everyday lives. A user may use cleaners in various floor environments. For example, a user may perform cleaning on floor surfaces of various materials such as on the carpet, a hard floor, a mat, etc. Alternatively, a user may perform cleaning on a flat surface or a curved surface, or in a corner part.

Accordingly, there is a rising need for a cleaner that can identify floor characteristics correctly, and can operate appropriately in accordance thereto.

### [Disclosure]

### [Technical Solution]

According to at least one embodiment of the disclosure, a cleaner includes a suction module, memory storing a plurality of artificial intelligence models corresponding to each of a plurality of operation sections that divided cleaner operations used in cleaning into a plurality of operations, and a processor. The processor sucks foreign substances by driving the suction module, collects state data related to the driving of the suction module and stores the data in the memory, identifies at least one operation section corresponding to the state data among the plurality of operation sections, identifies floor characteristics of a floor surface on which the cleaning is performed by using an artificial intelligence model corresponding to the identified operation section among the plurality of artificial intelligence models, and adjusts a driving state of the suction module based on the identified floor characteristics.

Also, according to at least one embodiment of the disclosure, an operating method of a cleaner including a suction module includes the steps of sucking foreign substances by driving the suction module, collecting state data related to the driving of the suction module and storing the data, identifying at least one operation section corresponding to the state data among a plurality of operation sections that divided operations of the cleaner used in cleaning into a plurality of operations, and identifying floor characteristics of a floor surface on which the cleaning is performed by using an artificial intelligence model corresponding to the identified operation section among a plurality of artificial intelligence models trained in advance to correspond to each of the plurality of operation sections and stored, and adjusting a driving state of the suction module based on the identified floor characteristics.

In addition, a non-transitory computer-readable recording medium according to at least one embodiment of the disclosure stores a program for performing an identification method including the steps of, based on the cleaner performing a cleaning job, collecting state data related to the cleaning job, identifying at least one operation section corresponding to the state data among a plurality of operation sections that divided operations of the cleaner performing the cleaning job into a plurality of operations, and identifying characteristics of a floor on which the cleaning job is performed by using an artificial intelligence model corresponding to the identified operation section among a plurality of artificial intelligence models trained in advance to correspond to each of the plurality of operation sections and stored.

### [Brief Description of Drawings]

FIG. 1 is a diagram for illustrating an example of a configuration of exterior of a cleaner according to at least one embodiment of the disclosure;
FIG. 2 is a block diagram for illustrating a configuration of a cleaner according to at least one embodiment of the disclosure;
FIG. 3 is a diagram illustrating an example of current data which is one of state data of a cleaner according to at least one embodiment of the disclosure;
FIG. 4 is a diagram for illustrating an example of a configuration of software of a cleaner according to at least one embodiment of the disclosure;
FIG. 5 and FIG. 6 are diagrams for illustrating an example of a training method of a section identification model using the section identification model in FIG. 4;
FIG. 7 is a diagram for illustrating an operation of a cleaner according to at least one embodiment of the disclosure;
FIG. 8 is a diagram for illustrating an operation of a cleaner of identifying floor characteristics by using an artificial intelligence model according to at least one embodiment of the disclosure;
FIG. 9 is a diagram for illustrating an example of an operation of a cleaner of identifying floor characteristics by using a plurality of artificial intelligence models according to at least one embodiment of the disclosure;
FIG. 10 is a diagram for illustrating another example of an operation of a cleaner of identifying floor characteristics by using a plurality of artificial intelligence models according to at least one embodiment of the disclosure; and
FIG. 11 is a flow chart for illustrating an operating method of a cleaner according to at least one embodiment of the disclosure.

### [Mode for Invention]

As terms used in the various embodiments of the disclosure, general terms that are currently used widely were selected as far as possible, in consideration of the functions described in the disclosure. However, the terms may vary depending on the intention of those skilled in the art who work in the pertinent field, previous court decisions, or emergence of new technologies, etc. Also, in particular cases, there may be terms that were designated by the applicant on his own, and in such cases, the meaning of the terms will be described in detail in the relevant descriptions in the disclosure. Accordingly, the terms used in the disclosure should be defined based on the meaning of the terms and the overall content of the disclosure, but not just based on the names of the terms.

Also, the various embodiments of the disclosure and the terms used in the embodiments are not for limiting the technical characteristics described in the disclosure to specific embodiments, but they should be interpreted to include various modifications, equivalents, or alternatives of the embodiments.

In addition, with respect to the detailed description of the drawings, similar or related components may be designated by similar reference numerals.

Further, a singular form of a noun corresponding to an item may include one of the item or a plurality of the items, unless instructed obviously differently in the related context.

Also, in the disclosure, each of the phrases "A or B," "at least one of A and B," "at least one of A or B," "A, B, or C," "at least one of A, B, and C," and "at least one of A, B, or C" and the like may include any one of the items listed together with the phrase among the phrases, or all possible combinations of the listed items.

In addition, terms such as "first," "second," and the like may be used just to distinguish one element from another element, and are not intended to limit the elements from another aspect (e.g.: the importance or the order).

Further, in case it is mentioned that one element (e.g.: a first element) is "coupled" or "connected" to another element (e.g.: a second element) together with the term "functionally" or "communicatively" or without such a term, it means that the one element may be connected to the another element directly (e.g.: via wire), wirelessly, or through a third element.

Also, terms such as "include" or "have" should be construed as designating that there are such characteristics, numbers, steps, operations, elements, components, or a combination thereof described in the disclosure, but not as excluding in advance the existence or possibility of adding one or more of other characteristics, numbers, steps, operations, elements, components, or a combination thereof.

In addition, in case it is mentioned that one element is "connected with," "combined with," "supported by," or "contacted with" another element not only includes a case wherein the elements are directly connected, combined, supported, or contacted, but also a case wherein the elements are indirectly connected, combined, supported, or contacted through a third element.

Further, the description in the disclosure that one element is "on top of" another element not only includes a case wherein the one element contacts the another element, but also a case wherein still another element exists between the two elements.

Also, the term "and/or" includes a combination of a plurality of related components described, or any one component among the plurality of related components described.

In addition, in the disclosure, "a module" or "a part" performs at least one function or operation, and may be implemented as hardware or software, or as a combination of hardware and software. Further, a plurality of "modules" or "parts" may be integrated into at least one module and implemented as at least one processor, except "modules" or "parts" which need to be implemented as specific hardware.

Further, operations performed by a module, a program, or other components according to the various embodiments may be executed sequentially, in parallel, repetitively, or heuristically. Or, at least some of the operations may be executed in a different order or omitted, or other operations may be added.

Meanwhile, various elements and areas in drawings were illustrated schematically. Accordingly, the technical idea of the disclosure is not limited by the relative sizes or intervals illustrated in the accompanying drawings.

Meanwhile, a cleaner according to various embodiments of the disclosure may include, for example, at least one of a vacuum cleaner, a robot cleaner, a handheld cleaner, or a stick cleaner.

Hereinafter, an embodiment of the disclosure will be described in more detail with reference to the accompanying drawings.

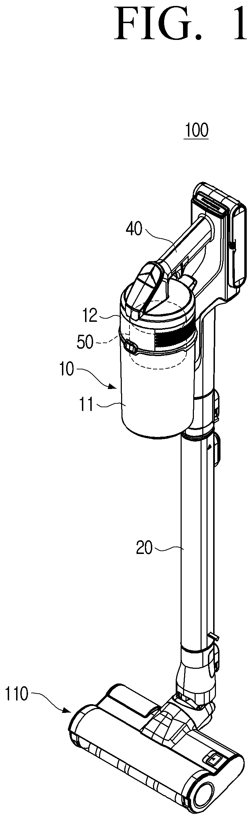

FIG. 1 is a diagram for illustrating an example of a configuration of exterior of a cleaner according to at least one embodiment of the disclosure.

Referring to FIG. 1, a cleaner 100 according to an embodiment of the disclosure has a form of a stick type (or an upright type) cleaner. In the illustrated example, a shape by an upright method wherein a suction module is integrally formed with the main body was illustrated, but in actual implementation, a canister method wherein a suction module is provided separately from the main body, and is connected by an extension pipe may be used. Alternatively, the cleaner 100 may be implemented as various types of cleaners such as a wirelessly controlled cleaner, a robot cleaner, a handheld type cleaner, etc.

The cleaner 100 may include a cleaner main body 10 and a suction module 110. The cleaner main body 10 may accommodate major components such as a motor and a processor, etc. In the disclosure, the concept of the main body is based on assumption of separation of components such as the suction module 110 or a stick 20, etc., but if the cleaner 100 has a form wherein the aforementioned components are integrated, the components may also be referred to as the main body.

The cleaner 100 may include a stick 20 connecting the cleaner main body 10 and the suction module 110, and a handle part 40 connected with the cleaner main body 10. The stick 20 may perform a role of a passage that connects the cleaner main body 10 and the suction module 110, and provides suction power generated by driving of a motor inside the cleaner main body 10 to the side of the suction module 110, and transmits foreign substances sucked at the suction module 110 by the suction power to the inside of the cleaner main body 10. If necessary, the stick 20 and the cleaner main body 10 may be detachable. Also, on the cleaner main body 10, a cleaning tool different from the aforementioned stick 20 or suction module 110 may be attached. The handle part 40 is a part coupled to the cleaner main body 10, and may be provided such that a user can perform operations of the cleaner while holding it.

The cleaner main body 10 may include a dust collection device 11 and a driving device 12 arranged on its inside. The dust collection device 11 may perform a function of separating foreign substances from air sucked at the suction module 110, and collecting them.

The driving device 12 may include a motor assembly 50 that generates suction pressure of the cleaner 100. The motor assembly 50 may generate power so as to generate suction power inside the cleaner main body 10.

The motor assembly 50 may include a first motor, and generate suction pressure through a rotation of the first motor.

Specifically, if a driving command for the first motor is input, and electric power is supplied to the first motor, an impeller gets to rotate by the driving of the first motor. Suction pressure is formed by the rotation of the impeller, and by such suction pressure, air including foreign substances may be sucked through an inlet of the suction module 110. As the rotation speed of the first motor increases, the suction pressure becomes bigger.

When the suction intensity is set (or determined), the cleaner 100 may control the first motor to rotate at the rotation speed of the motor corresponding to the aforementioned set suction intensity.

The suction module 110 may be provided in the lower part of the cleaner main body 10, and may be arranged to contact the floor surface. The suction module 110 may be provided to contact the floor surface and bring dust or foreign substances on the floor surface into the cleaner main body 10 with suction power generated from the motor assembly 50.

In the suction module 110, a brush and a second motor may be included. Specifically, if electric power is supplied to the second motor, the brush may rotate by the driving of the second motor. The second motor may be various motors such as a direct current (DC) motor, an alternating current (AC) motor, a brushless DC (BLDC) motor, etc.

Depending on implementation examples, a driving device for provision of driving power of the aforementioned second motor may be separately provided on the side of the suction module 110. Alternatively, a driving device for control of the second motor may be provided in the cleaner main body 10.

The suction module 110 may alternatively be described as various terms such as a suction head, a suction device, a suction part, a suction system, etc., but it will be described as the suction module 110 in the disclosure. Also, in FIG. 1, the module that is detachable from the main body 10 or the stick 20 itself was referred to as the suction module 110, but the suction module 110 may be implemented in various forms according to the exterior configuration, the size, the type, etc. of the cleaner 100. For example, in case the cleaner 100 is implemented as a robot cleaner, the suction module 110 may be used as a term that integrally refers to the entire components that operate for performing cleaning by a suction method such as an inlet formed on the bottom surface of the robot cleaner, an air duct connected with the inlet, a dust collection device, and a motor assembly, etc.

As the brush is formed to protrude by specific length outside the inlet, in case the brush rotates, it may strike foreign substances such as dust, filth, hair, etc. stuck on the floor surface. By this, the foreign substances may be separated from the floor surface, and easily sucked by the inlet.

Meanwhile, according to floor characteristics, the aforementioned suction intensity and rotation speed of the brush may operate while being adjusted to values corresponding thereto. Floor characteristics mean characteristics of a floor on which the cleaner performs cleaning.

For example, in case the cleaner operates with the maximum suction power for all types of floor surfaces, on a specific floor surface, the floor surface may get stuck on the suction module 110 and it may become difficult to proceed with cleaning, and a fast rotation of the brush on a floor surface such as a carpet, etc. may generate damage of the carpet. For this reason, the cleaner needs to identify floor characteristics, and operate by suction intensity and rotation speed of the brush appropriate for them.

Floor characteristics that are generally used a lot may be divided into a lift state, a hard floor, a corner point of a hard floor, a long-pile carpet, a short-pile carpet, and a mat. Here, the lift state means a state wherein the cleaner is separated from the floor surface. A carpet is thick woolen fabric wherein fur like wool is woven to create fluff on the surface. A hard floor may be a case other than the aforementioned mat, carpet, and lift state.

In the disclosure, explanation is described by assuming a case wherein cleaning is performed by dividing floor characteristics into the aforementioned six types, but in actual implementation, only some of the aforementioned types may be cleaned, or floor surfaces of different types other than the aforementioned examples may be cleaned. For example, a hard floor may be divided by being subdivided into each type of floor materials (marble, solid wood, concrete, tiles, etc.).

Meanwhile, floor characteristics may be described as various terms such as floor materials, types of surfaces to be cleaned, characteristics of surfaces to be cleaned, types of floor surfaces, etc., but it will be described as floor characteristics in the disclosure.

As described above, when floor characteristics are identified, a driving state of the suction module may be adjusted to be appropriate for the floor characteristics. Accordingly, it is important to identify floor characteristics correctly.

However, in the case of a cleaner as in FIG. 1, the user may use the cleaner by various methods for performing a cleaning job. In other words, operations of a cleaner while performing a cleaning job may be divided into a plurality of operation sections.

For example, the user may perform cleaning while proceeding in a direction of continuously pushing, or continuously pulling the cleaner 100, or perform cleaning by repeatedly performing pushing and pulling operations. In other words, there may be a push section and a pull section, etc. Also, in the case of performing pushing and pulling operations, on a time point when a pushing operation and a pulling operation are converted, there may be a section wherein the cleaner temporarily stops. Further, a push section or a pull section may respectively be divided into an initial section, a middle section, and a later section, etc.

Specifically, a plurality of cleaning sections may include at least one of various sections such as at least one first section wherein the cleaner 100 performs cleaning while moving in a first direction (e.g., a pushing direction), at least one second section wherein the cleaner 100 performs cleaning while moving in a second direction (e.g., a pulling direction) opposite to the first direction, a conversion section wherein the cleaner 100 converts from the first direction to the second direction (a section wherein a pushing operation is converted to a pulling operation), a conversion section wherein the cleaner 100 converts from the second direction to the first direction (a section wherein a pulling operation is converted to a pushing operation), a section wherein the cleaner 100 temporarily stops on a specific position while performing cleaning, and a section wherein the cleaner 100 stopped on a specific position during a specific time or longer, etc.

In the disclosure, explanation is described by assuming a case wherein the cleaner operates while its operation sections are divided into six types, but in actual implementation, the operation sections may be divided into different types of operation sections other than the aforementioned examples.

For each of such cleaning sections, suction power of the cleaner or other various state data may be changed. Accordingly, even if data sensed in a push section and data sensed in a stop section have similar or identical statistical characteristics, it may not mean identical floor characteristics.

In other words, if data characteristics for each section of the cleaner are not considered, accuracy of identification for floor characteristics may deteriorate. In case floor characteristics are not identified correctly, cleaning cannot be performed in a driving state appropriate for the floor characteristics, and thus various problems such as increase of noises, damage to the pile of the carpet, or waste of electric power, etc. may be generated.

Accordingly, in the various embodiments of the disclosure, floor characteristics can be identified effectively by using a plurality of artificial intelligence models corresponding to each operation section of the cleaner.

Hereinafter, the cleaner 100 and a driving method thereof according to the various embodiments of the disclosure will be explained in detail.

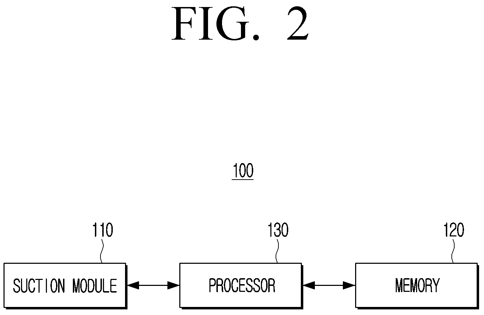

FIG. 2 is a block diagram for illustrating a configuration of a cleaner according to at least one embodiment of the disclosure.

Referring to FIG. 2, the cleaner 100 may include a suction module 110, memory 120, and a processor 130.

The suction module 110 is a component for sucking dust or foreign substances on a floor surface into the cleaner 100. As described above, the suction module 110 may suck foreign substances by generating suction power by driving of the driving device 12 included inside the cleaner 100. As the driving method of the suction module 110 was explained in detail in the aforementioned parts, overlapping explanation will be omitted.

The memory 120 is a component for storing at least one instruction, an operating system (O/S), a program, and data, etc. related to the cleaner 100. As an example, an instruction for identifying floor characteristics, an instruction for determining suction intensity of cleaning, an instruction for controlling various types of components of the cleaner, an instruction for retraining a plurality of pre-stored artificial intelligence models, etc. may be stored in the memory 120.

The memory 120 may store a plurality of pre-trained artificial intelligence models. For example, an artificial intelligence model may be implemented as a convolutional neural network (CNN), long short-term memory (LSTM), a deep neural network (DNN), a recurrent neural network (RNN), a restricted Boltzmann Machine (RBM), a deep belief network (DBN), a bidirectional recurrent deep neural network (BRDNN), etc., but is not limited to these examples.

Such an artificial intelligence model is a computing system implemented by conceiving an idea from a neural network of a human or an animal brain, and it may be referred to as a learning model, a machine learning model, a neural network model, a deep learning model, etc.

Specifically, a plurality of artificial intelligence models corresponding to each of a plurality of operation sections that divided cleaner operations used in cleaning into a plurality of operations, or a section identification model trained for identification of an operation section, etc. may be stored in the memory 120. As examples of the operation sections were explained in detail in the aforementioned parts, overlapping explanation will be omitted.

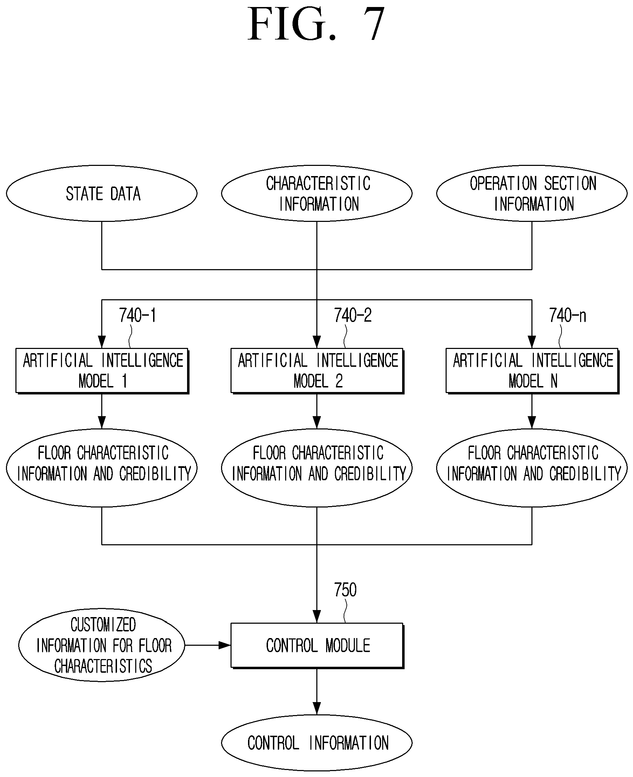

Artificial intelligence models as above will be explained in detail in FIG. 7 to FIG. 10.

The processor 130 is a component for controlling overall operations of the cleaner 100. Specifically, the processor 130 may control operations and components of the cleaner 100 by executing the at least one instruction stored in the memory 120 as described above. For example, the processor 130 may suck foreign substances by driving the suction module 110.

The processor 130 may be implemented as a digital signal processor (DSP), a microprocessor, a graphics processing unit (GPU), an artificial intelligence (AI) processor, a neural processing unit (NPU), etc. However, the disclosure is not limited thereto, and the processor 130 may include one or more of a central processing unit (CPU), a micro controller unit (MCU), a micro processing unit (MPU), a controller, an application processor (AP), or a communication processor (CP), and an ARM processor, or may be defined by the terms. Also, the processor 130 may be implemented as a system on chip (SoC) having a processing algorithm stored therein or large scale integration (LSI), or in the form of an application specific integrated circuit (ASIC) or a field programmable gate array (FPGA).

The processor 130 may be implemented in a form of being integrally integrated with the memory 120. In FIG. 2, the memory 120 and the processor 130 were illustrated as one each, but the memory 120 and the processor 130 may respectively be implemented as a plurality of memories and processors.

The processor 130 may collect state data related to driving of the suction module 110 and store the data in the memory 120.

The state data may be data regarding an operation state of the cleaner 100 that operates for performing cleaning. Specifically, in the case of performing cleaning by using the suction module 110, time series data for various items such as internal pressure of the suction module 110 generated by the motor assembly, suction power, a current and a voltage necessary for driving of the suction module 110 or the brush, rotation speed of the brush included in the suction module 110, etc. may be used as the state data. The current and voltage data necessary for driving of the suction module 110 or the brush may be data regarding the size of a current or a voltage applied for operating the motor assembly. As described above, the brush may be rotated by driving of the second motor, and thus the time series data for a current and a voltage necessary for driving of the brush may be data that measured a change of the size of a current or a voltage applied to the second motor for each time.

However, examples of the state data are not limited thereto, and data that is changed variously according to operations of the cleaner may be utilized as the state data. In the case of driving the suction module according to the user's manipulation, the processor 130 may directly secure data regarding a change of the size of a current or a voltage applied to the first motor or the second motor of the motor assembly for driving the suction module as the state data. Also, the processor 130 may directly obtain data regarding suction power that varies according to the size of a current or a voltage, or the rotation speed of the brush, and store the data in the memory 120 as the state data. However, the disclosure is not limited thereto, and the cleaner 100 may further include at least one sensor for sensing various state data. In this case, the processor 130 may obtain state data based on sensing values sensed at each sensor, and store the data in the memory 120.

The processor 130 may store the state data itself in the memory 120, or perform a pre-processing job for the collected state data and extract the data in a form of characteristic information, and store it in the memory 120.

Specifically, the processor 130 may perform a pre-processing job such as a filtering job of removing noises or data of an unnecessary frequency band from the collected raw data, or a normalizing job of fitting the data into data within a predetermined normal size range. Also, the processor 130 may extract characteristic information by performing various types of operations for the pre-processed state data.

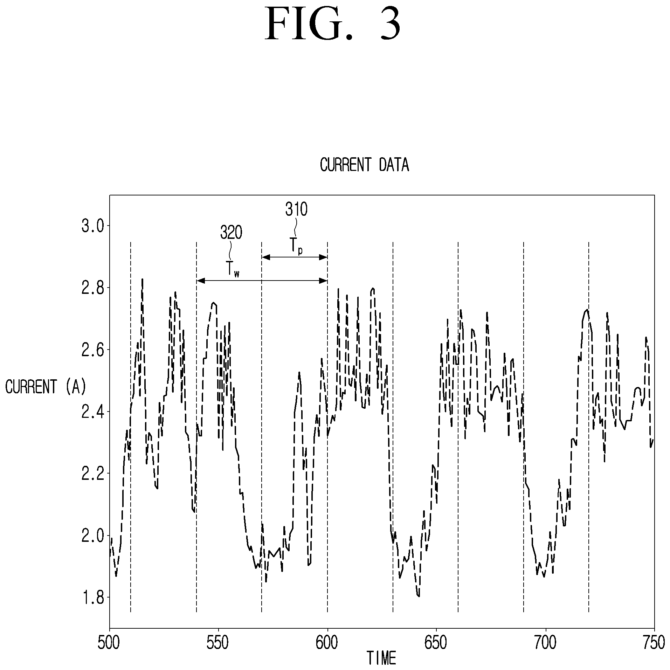

The characteristic information is information extracted for identifying characteristics of the state data including the aforementioned time series data. For example, the characteristic information may be information such as a variance, a standard deviation, a slope, an average value, etc. calculated for the state data during a specific time section, or information on change patterns such as the periodicity, the peak size, etc. Such characteristic information will be explained in detail in FIG. 3.

The processor 130 may identify an operation section of the cleaner 100 based on the aforementioned state data or characteristic information. In other words, the processor 130 may identify whether the cleaner 100 is currently in a push section, a pull section, a conversion section between them, or a stop section, etc. If the characteristics of the state data measured in advance for each operation section were stored in advance in the memory 120, the processor 130 may compare the state data or the characteristic information and the information stored in the memory 120, and identify an operation section according to the matching degree. However, the disclosure is not necessarily limited thereto, and the processor 130 may identify an operation section by using a section identification model trained to identify an operation section. Detailed explanation in this regard will be described in the parts described below.

When an operation section is identified, the processor 130 may identify characteristics of a floor on which the cleaning job is performed by using an artificial intelligence model corresponding to the identified operation section. For example, if the identified operation section is a push section, the processor 130 may select an artificial intelligence model that learned various floor characteristics based on the push section, and input the state data into the artificial intelligence model.

If there are a plurality of identified operation sections, the processor 130 may use all of the artificial intelligence models corresponding to each operation section. For example, the processor 130 may input the state data or the characteristic information into each of the artificial intelligence models corresponding to each operation section, and obtain output values of each of the artificial intelligence models. The processor 130 may compare credibility scores of the obtained output values to identify characteristics of the floor on which the cleaning job is performed.

The processor 130 may adjust a driving state of the suction module like determining the suction intensity based on the identified floor characteristic. For example, if the identified floor characteristic is a carpet, the processor 130 may determine suction intensity having lower suction power than suction power in a case wherein the floor characteristic was identified as a hard floor. Also, even in the case of a carpet, it may be divided into a short-pile carpet, a long-pile carpet, etc. according to the length of the pile, and according to the material of the pile, it may be divided variously into a wool carpet, a cotton carpet, a synthetic material carpet, etc. The processor 130 may adjust a driving state differently according to the detailed types of a carpet as above. For example, if the identified floor characteristic is a long-pile carpet, the processor 130 may determine suction intensity having lower suction power than suction power in a case wherein the floor characteristic was identified as a short-pile carpet for preventing damage to the carpet due to the suction power. Also, in the case of a wool carpet, the processor 130 may lower the suction intensity to prevent damage to the pile. In contrast, in the case of a synthetic fiber carpet, as its durability is high, the processor 130 may maintain the suction intensity to be identical to a general floor, or increase the intensity more.

Here, the suction intensity indicates a suction degree of the cleaner, and in the case of dividing the minimum suction power to the maximum suction power of the cleaner into a plurality of stages, the suction intensity may be information indicating one of the steps. For example, in the case of supporting three suction intensities (or suction stages), the determined suction intensity may be one of the aforementioned three suction intensities. Such suction intensity may be referred to as suction power, a suction degree, suction strength, cleaning intensity, cleaning strength, etc.

Also, the processor 130 may not only determine the suction intensity, but also determine the rotation speed of the brush based on the identified floor characteristic information. When the rotation speed of the brush is determined, the processor 130 may drive the second motor such that the brush rotates by the determined rotation speed.

Meanwhile, if a user command for adjusting the suction intensity of the cleaner is input while operating at the suction intensity determined through the aforementioned process, the processor 130 may adjust the current suction intensity to suction intensity corresponding to the user command.

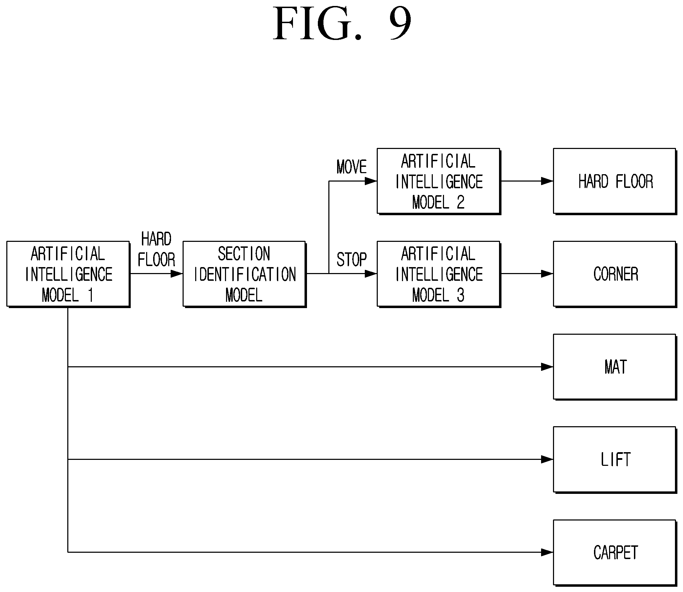

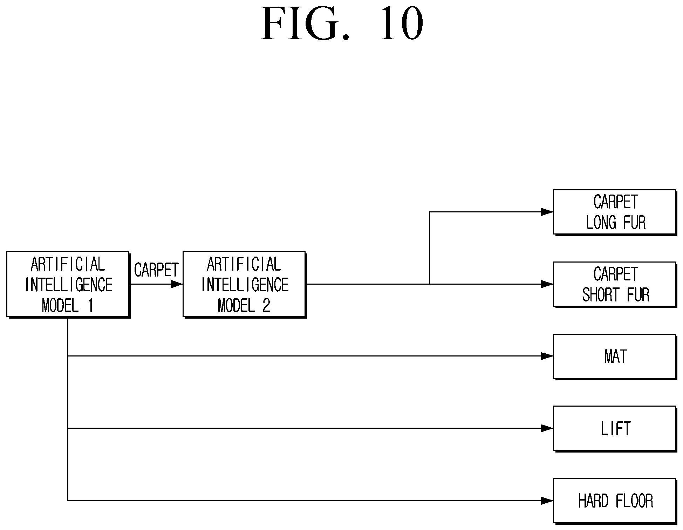

Other than the above, the processor 130 may identify operation sections and floor characteristics correctly by selectively using the plurality of artificial intelligence models by various methods. Detailed explanation regarding such operations will be described in the parts of FIG. 9 and FIG. 10 that will be described below.

In the above, only simple components of the cleaner 100 were illustrated, but in actual implementation, other components that were not illustrated may be further included. For example, the cleaner 100 may further include at least one sensor, an input device, etc., and obtain a sensing value regarding a state of the cleaner 100 through the sensor, or receive input of a control command of the user through the input device.

FIG. 3 is a diagram illustrating an example of current data which is one of state data of a cleaner according to at least one embodiment of the disclosure.

According to FIG. 3, current data is displayed in a form of a graph that changes in various sizes according to passage of time. As described above, the processor 130 may perform various pre-processing jobs such as filtering, normalization, etc. FIG. 3 illustrates an example of current data after pre-processing was completed. The processor 130 may obtain characteristic information by periodically dividing change patterns of current data and analyzing them.

Specifically, the processor 130 may divide state data within a specific time section (Tw, 320) in units of a specific cycle (Tp, 310), and extract characteristic information such as a variance, a standard deviation, a slope, an average value, a change pattern, etc. of the data within each cycle. FIG. 3 illustrates a case wherein Tw is set as 2Tp. According to an embodiment, if any t point is set as the standard, the processor 130 may store state data during a past Tw time in a form of an array in the memory 120. The processor 130 may repeat such an operation by a Tp cycle. Accordingly, if it is set that Tw=2Tp, half of the state data stored per Tp cycle may be newly generated data, and the other half may be data stored in the previous cycle.

The processor 130 may identify which operation section a section is based on the characteristic information within each cycle. For example, in the case of calculating a slope, in case the slope of the current data becomes bigger in a + direction, the processor 130 may determine that the section is a push section, and in case the slope becomes drastically bigger in a - direction, the processor 130 may determine that the section is a section wherein a push section is converted to a pull section or vice versa.

The processor 130 may perform such determination by using the section identification model.

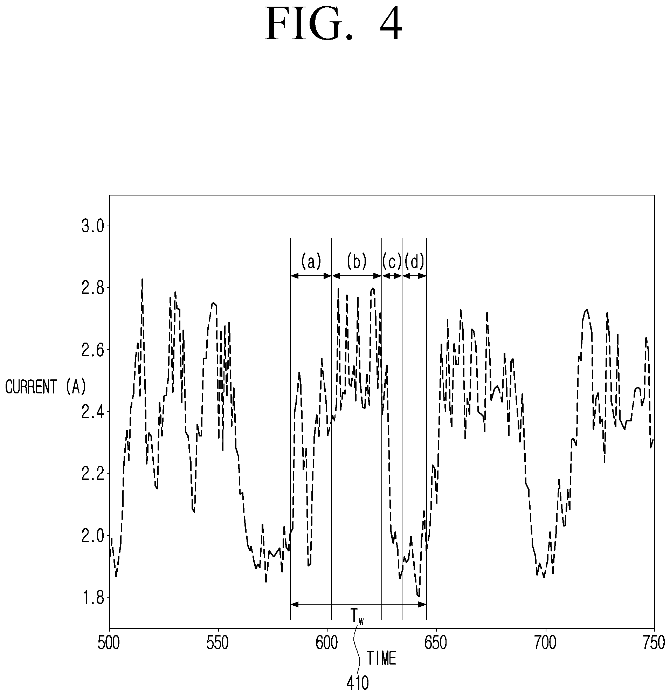

FIG. 4 is a diagram for illustrating an example of a configuration of software of a cleaner according to at least one embodiment of the disclosure. According to FIG. 4, in the memory 120 of the cleaner 100, a state data collection module 620, a pre-processing module 630, a section identification model 640, etc. may be stored.

While performing cleaning by driving the suction module 110 of the cleaner 100, the processor 130 may execute the state data collection module 620, and collect state data related to driving of the suction module 110. In case the cleaner 100 further includes a sensor (not shown), the state data collection module 620 may obtain state data by analyzing a sensing value of the sensor.

The processor 130 may execute the pre-processing module 630, and perform a pre-processing job for the collected state data, and extract the characteristic information. The pre-processing module 630 may grant a weight to each of the state data and constitute the data in a form of a data set. Also, the pre-processing module 630 may process the data to fit the purpose of the section identification model 640.

The processor 130 may input the aforementioned state data or characteristic information into the section identification model 640 to identify operation section information.

The section identification model 640 may be trained by the state data for each section or the state data for a plurality of sections, etc.

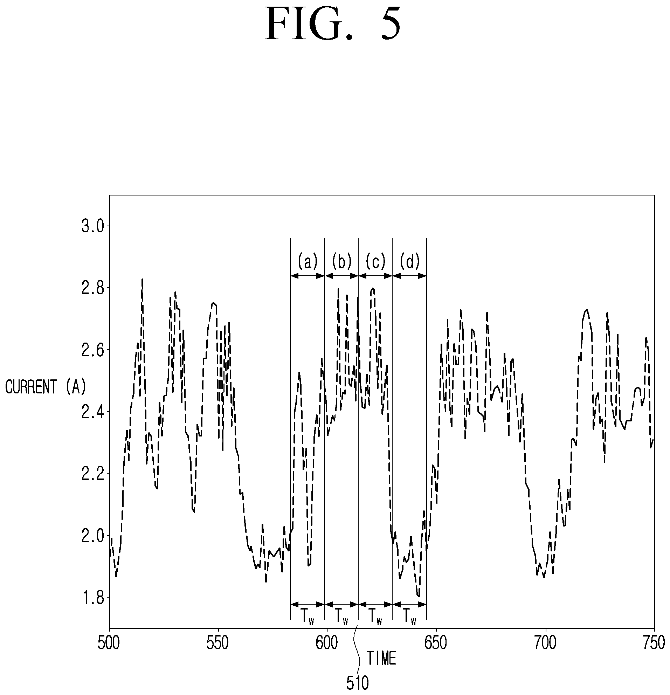

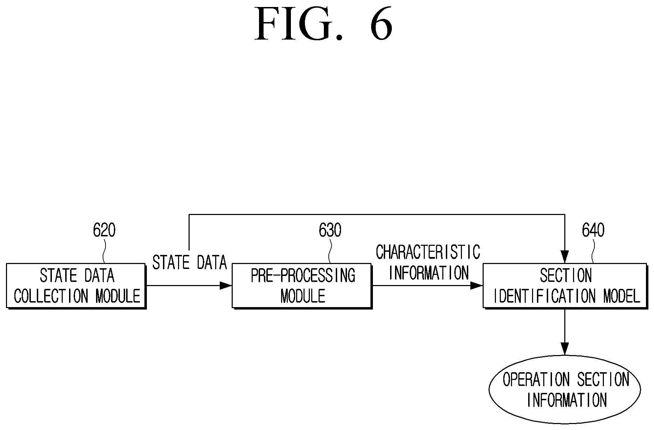

FIG. 5 and FIG. 6 are diagrams for illustrating an example of a training method of a section identification model using the section identification model in FIG. 4.

The processor 130 may perform a pre-processing job for the collected state data, and divide the operation sections of the cleaner into a plurality of sections based on the pre-processed data.

FIG. 5 illustrates a state wherein a cleaning section was divided into four sections based on current data. Specifically, a cleaning section may be divided into an initial push section (a) wherein the cleaner is pushed to move, a later push section (b) wherein the cleaner that is being pushed is pushed while maintaining constant power, a (c) section wherein the cleaner was temporarily stopped for converting from a push section to a pull section, and a pull section (d) wherein the cleaner that was temporarily stopped is pulled to move.

FIG. 5 illustrates a case wherein a specific time section (Tw, 410) was set to be similar to or bigger than the time that summed up all of the aforementioned (a), (b), (c), and (d) sections. In this case, the section identification model 640 may be trained by a pattern of including all of the aforementioned four sections.

FIG. 6 illustrates a case wherein a specific time section (Tw, 510) was set to be similar to the time of each of the (a), (b), (c), and (d) sections, which are the aforementioned cleaning sections. In this case, the section identification model 640 may be selectively trained for each specific cleaning section. In this case, an algorithm for section determination may be utilized.

For example, the processor 130 may obtain a change amount through methods such as a variance, a standard deviation, etc. for the state data, and if the change amount is bigger than a specific numerical value, the processor 130 may determine the sections as the (a) and (c) sections, and if the change amount is smaller than the specific numerical value, the processor 130 may determine the sections as the (b) and (d) sections. Also, the processor 130 may obtain a change amount and a direction through methods such as linear or polynomial regression, etc., and if the change amount is bigger than the specific numerical value, and is a positive number, the processor 130 may determine the section as the (a) section, and if the change amount is bigger than the specific numerical value, and is a negative number, the processor 130 may determine the section as the (c) section. Further, if the change amount is smaller than the specific numerical value, and the previous section is (a), the processor 130 may determine the section as the (b) section, and if the change amount is smaller than the specific numerical value, and the previous section is (c), the processor 130 may determine the section as the (d) section.

However, methods of training the section identification model are not limited to the aforementioned embodiments, and various methods such as deep learning, etc. may be applied.

The section identification model 640 that was trained for identification of an operation section may, if a pre-processed data set is input, identify sections corresponding to the input data set, and output probability values regarding which sections the data set corresponds to. When probability values are output, the section identification model 640 may determine an operation section having the highest probability value among the output information as the current operation section. For example, the section identification model 640 may output a probability value corresponding to a push section as 0.7, and output a probability value corresponding to a stop section as 0.5, and in this case, the section identification model 640 may determine the operation section as the push section having the bigger probability value.

In the above, information that is input at the time of a pre-processing job is explained as state data related to driving of the suction module, but the disclosure is not necessarily limited thereto, and some state data may include information input through the sensor, or information stored in the memory 120, etc. or predetermined data, etc.

FIG. 7 is a diagram for illustrating an operation of a cleaner according to at least one embodiment of the disclosure.

The processor 130 may identify an operation section based on state data or characteristic information extracted therefrom.

If there are a plurality of identified operation sections, the processor 130 may input the state data or the characteristic information into each of artificial intelligence models 740-1 - 740-n corresponding to each of the identified operation sections. Alternatively, in case identification of an operation section is impossible, the processor 130 may input the state data or the characteristic information into all or some of the stored artificial intelligence models.

Each artificial intelligence model 740-1 - 740-n into which information was input may output floor characteristic information and credibility scores in that regard based on the input information.

A control module 750 is a software module for determining floor characteristics based on output values of each artificial intelligence model 740-1 - 740-n. For example, the control module 750 may sum up credibility scores obtained through each artificial intelligence model for each floor characteristic, and determine the floor characteristic for which the summed-up credibility score is the highest as the current floor characteristic.

Specifically, in case operation sections were identified as a push section and a temporary stop section in FIG. 7, state data in the push section may be input into the artificial intelligence model 1 740-1, and state data in the temporary stop section may be input into the artificial intelligence model 2 740-2. Based on the input state data, in case the output values of the artificial intelligence model 1 740-1 are lift credibility 0.7 and mat credibility 0.3, and the output values of the artificial intelligence model 2 740-2 are lift credibility 0.5 and mat credibility 0.5, the final credibility scores summed up for each material are lift 1.2 and mat 0.8, and thus the floor characteristic may ultimately be determined as a lift state having the bigger credibility score.

However, the operation of the control module 750 is not necessarily limited thereto, and according to another embodiment, the control module 750 may determine floor characteristic information having the highest credibility score among the output information as the current floor characteristic.

Specifically, in case operation sections were identified as a push section and a temporary stop section in FIG. 7, state data in the push section may be input into the artificial intelligence model 1 740-1, and state data in the temporary stop section may be input into the artificial intelligence model 2 740-2. Based on the input state data, in case the output values of the artificial intelligence model 1 740-1 are a lift state and credibility 0.7, and the output values of the artificial intelligence model 2 740-2 are mat and credibility 0.5, the floor characteristic may ultimately be determined as a lift state having the bigger credibility score.

When the floor characteristic is determined as above, the control module 750 may generate control information for adjusting the driving state of the suction module 110 based on customized information for floor characteristics stored in the memory 120. Accordingly, even if the user does not separately manipulate, the cleaner 100 may automatically operate at the suction intensity that fits the identified floor characteristic information.

The customized information for floor characteristics may include information about the suction intensity of the suction module, the rotation speed of the brush, etc. that were set to fit the floor characteristics. For example, in case floor characteristic information was input as a lift state, the control module 750 may generate a control instruction for minimizing the suction intensity based on the customized information for floor characteristics that minimizes the suction intensity in a lift state.

Meanwhile, a case wherein the control module 750 adjusts the suction intensity was suggested as an example, but the control module 750 may adjust various driving states such as the rotation speed of the brush, etc. as well as the suction intensity. The control information may be implemented as data in various forms such as a digital control code applied to each component, a pulse width modulation (PWM) control signal, an analog signal, etc.

Meanwhile, in the above, it was explained that the control module 750 determines floor characteristics by itself by directly receiving outputs of the artificial intelligence models, but the disclosure is not limited thereto, and determination of the floor characteristics described above may be performed by a determination module or a post-processing module separately provided. In other words, the control module 750 may be designed as a software module that receives an input of a determined floor characteristic, and performs only a control operation in accordance thereto.

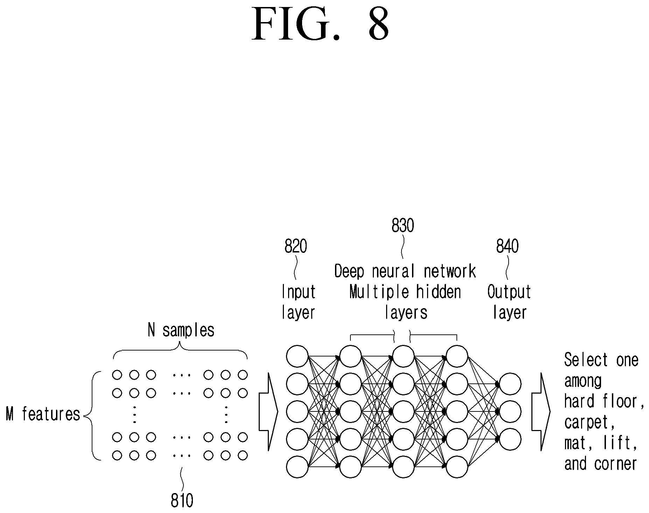

FIG. 8 is a diagram for illustrating an operation of a cleaner of identifying floor characteristics by using an artificial intelligence model according to at least one embodiment of the disclosure.

According to FIG. 8, the cleaner may collect state data related to driving of the suction module, and perform a pre-processing job. In the case of including a software module as in FIG. 4, the pre-processing module 630 may constitute a data set 810 in a form of a 2D array of M features and N samples. Here, each feature means state data items or characteristic information such as a current, pressure, etc. collected during a cleaning job, and samples indicate observation values of each state data item or characteristic information collected during a specific time section. As the pre-processing process was explained in detail in FIG. 3, overlapping explanation will be omitted.

The data set 810 constituted through the aforementioned pre-processing process may be input into various artificial intelligence models such as a neural network, etc. to determine floor characteristic information.

An artificial intelligence model may consist of a plurality of neural network layers. Each layer has at least one weight value, and performs an operation of the layer through the operation result of the previous layer and at least one defined operation. As examples of a neural network, there are a convolutional neural network (CNN), a deep neural network (DNN), a recurrent neural network (RNN), a restricted Boltzmann Machine (RBM), a deep belief network (DBN), a bidirectional recurrent deep neural network (BRDNN) and deep Q-networks, and a Transformer, but the neural network in the disclosure is not limited to the aforementioned examples excluding specified cases.

The neural network in FIG. 8 may have been trained by various learning algorithms such as supervised learning, unsupervised learning, semi-supervised learning, or reinforcement learning, and training data such as state data for each floor characteristic.

Specifically, a neural network may generally consist of an input layer 820, one or more hidden layers 830, and an output layer 840. The input layer 820 means the first layer that receives data in the neural network, and the hidden layers 830 are layers that are located between the input layer and the output layer and perform a core role in learning complex characteristics and patterns of data, and the output layer 840 means the final layer of the neural network that performs a role of indicating an answer that the neural network derived for problem solution.

According to FIG. 8, if a data set is input through each node of the input layer 820 of the artificial intelligence model, each node performs a predetermined operation by using a weight for the input data, and sequentially outputs the result to the next layer. The hidden layers 830 may learn the input information, and extract floor characteristic information and credibility scores through the learned information. The information extracted from the hidden layers 830 may be ultimately output through the output layer 840.

The processor 130 may identify floor characteristics by using software modules and artificial intelligence models of various structures as above.

FIG. 9 is a diagram for illustrating an example of an operation of a cleaner of identifying floor characteristics by using a plurality of artificial intelligence models according to at least one embodiment of the disclosure.

Referring to FIG. 9, the processor 130 may identify a floor characteristic for the first time by inputting the state data or the characteristic information into one of the plurality of artificial intelligence models. As an example, the processor 130 may perform the first identification by selecting an artificial intelligence model trained for various types of floor characteristics among the plurality of artificial intelligence models.

When the first identification is performed, the processor 130 may identify the current operation section by using the section identification model, and finally identify the floor characteristic by selectively using artificial intelligence models corresponding to the floor characteristic identified for the first time and the identified current operation section. In this case, the section identification model may be a model trained based on state data of various cycles as described above, or a model trained based on state data for each section of a specific floor characteristic. In other words, in case the first identification result is a hard floor, the processor 130 may identify a section by using an artificial intelligence model trained to identify a section by using the state data on a hard floor.

When a section is identified by the section identification model, the processor 130 finally identifies the floor characteristic by using an artificial intelligence model corresponding to the identified section.

FIG. 9 illustrates a process wherein the processor 130 inputs the state data or the characteristic information into the artificial intelligence model 1 and identifies the floor characteristic as a hard floor for the first time, and then, if the current operation section is identified as a stop state through the section identification model, the processor 130 finally identifies whether the floor characteristic is a hard floor or a corner by inputting the floor characteristic information identified for the first time and the section information into the artificial intelligence model 3 corresponding to a stop state.

FIG. 10 is a diagram for illustrating another example of an operation of a cleaner of identifying floor characteristics by using a plurality of artificial intelligence models according to at least one embodiment of the disclosure.

According to FIG. 10, the processor 130 may identify a floor characteristic for the first time by inputting the state data into an artificial intelligence model trained to detect a plurality of floor characteristics among the plurality of artificial intelligence models, and if the result identified for the first time is a carpet, the processor 130 may finally identify the floor characteristic as one of a long-pile carpet or a short-pile carpet by using an artificial intelligence model trained to identify carpet types.

Specifically, in case the floor characteristic information was identified as a carpet by inputting the state data or the characteristic information into the artificial intelligence model 1 trained to identify floor characteristics, the processor 130 may identify the carpet as a long-pile carpet among carpets based on the state data or the characteristic information identified at the artificial intelligence model 2 trained to identify carpet types.

If the pile length of the carpet is identified as in FIG. 10, satisfaction of an artificial intelligence function can be provided to the user by adjusting the driving state according to the pile length. For example, in case the cleaner is used on a long-pile carpet, if the suction power is too strong, a case wherein the carpet pile is sucked into the inlet and the inlet is blocked and the cleaner does not move, or the carpet pile is plucked out may be generated. Accordingly, in case a carpet is identified as a long-pile carpet, the processor 130 may protect the pile of the carpet or improve the progressing power of the cleaner by lowering the suction intensity.

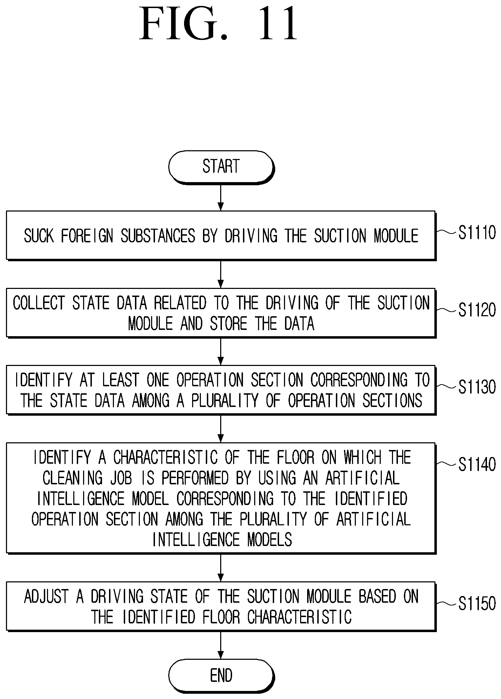

FIG. 11 is a flow chart for illustrating an operating method of a cleaner according to at least one embodiment of the disclosure.

Referring to FIG. 11, foreign substances may be sucked by driving the suction module in the operation S1110. Specifically, foreign substances such as dust stuck on a floor surface may be struck by rotating the brush included in the suction module, and the foreign substances separated from the floor surface may be easily sucked.

Then, state data related to the driving of the suction module may be collected and stored in the operation S1120. For example, in case the suction module is driven as described above, state data related to the driving of the suction module such as the internal pressure of the suction module, a current necessary for the driving of the suction module, etc. may be collected and stored.

Then, at least one operation section corresponding to the state data may be identified among a plurality of operation sections in the operation S1130. For example, information such as a push section, a temporary stop section, etc. may be identified in a cleaning operation section of the cleaner, and here, a section may be identified by using the aforementioned section identification model.

Then, a characteristic of the floor on which the cleaning job is performed may be identified by using an artificial intelligence model corresponding to the identified operation section among the plurality of artificial intelligence models in the operation S1140. For example, in the case of using an artificial intelligence model corresponding to the identified operation section (i.e., the embodiment in FIG. 7), a characteristic of the floor on which the cleaning job is performed can be identified more correctly.

Then, the driving state of the suction module may be adjusted based on the identified floor characteristic in the operation S1150. For example, in case the floor characteristic was identified as a corner, the driving state of the suction module may be adjusted to fit the floor characteristic like enhancing the suction intensity for absorbing foreign substances such as the dust, etc. on the floor surface.

The various embodiments described above may be implemented solely as individual embodiments, or at least one embodiment may be combined on the whole or partially, and implemented in one apparatus together.

According to the various embodiments described above, by enhancing accuracy of determination of floor characteristics by using artificial intelligence models that learned data for each operation section of a cleaner, a high level of satisfaction of an artificial intelligence function can be provided to consumers.

Also, the various embodiments of the disclosure may be implemented as software stored in a machine-readable storage medium that can be mounted on or connected to a smartphone or a user terminal apparatus, and other various electronic apparatuses (e.g.: a computer).

Specifically, a non-transitory computer-readable storage medium storing software for sequentially performing the steps of, based on a cleaner performing a cleaning job, collecting state data related to the cleaning job, identifying at least one operation section corresponding to the state data among a plurality of operation sections that divided operations of the cleaner performing the cleaning job into a plurality of operations, and identifying characteristics of a floor on which the cleaning job is performed by using an artificial intelligence model corresponding to the identified operation section among a plurality of artificial intelligence models trained in advance to correspond to each of the plurality of operation sections and stored may be provided.

A apparatus on which such a non-transitory computer-readable storage medium is mounted may perform various operations such as collecting state data, identifying an operation section, identifying floor characteristics, adjusting a driving state of a suction module, etc. explained in the aforementioned various embodiments.

The term 'non-transitory' in a non-transitory computer-readable storage medium only means that the storage medium does not include a signal, and is tangible, and does not distinguish whether data is stored in the storage medium semi-permanently or temporarily.

Alternatively, a program for performing a method according to the aforementioned various embodiments may be distributed on-line through an application store. In the case of on-line distribution, at least a portion of a computer program product may be stored in a storage medium such as the server of the manufacturer, the server of the application store, and the memory of the relay server at least temporarily, or may be generated temporarily.

Also, each of the components (e.g.: a module or a program) according to the various embodiments may consist of a singular object or a plurality of objects, and among the aforementioned corresponding sub components, some sub components may be omitted, or other sub components may be further included in the various embodiments. Alternatively or additionally, some components (e.g.: a module or a program) may be integrated as an object, and perform functions that were performed by each of the components before integration identically or in a similar manner. Further, operations performed by a module, a program, or other components according to the various embodiments may be executed sequentially, in parallel, repetitively, or heuristically. Or, at least some of the operations may be executed in a different order or omitted, or other operations may be added.

Also, while preferred embodiments of the disclosure have been shown and described, the disclosure is not limited to the aforementioned specific embodiments, and it is apparent that various modifications may be made by those having ordinary skill in the technical field to which the disclosure belongs, without departing from the gist of the disclosure as claimed by the appended claims. Further, it is intended that such modifications are not to be interpreted independently from the technical idea or prospect of the disclosure.

## Claims

1. A cleaner comprising:
a suction module;
memory storing a plurality of artificial intelligence models corresponding to each of a plurality of operation sections that divided cleaner operations used in cleaning into a plurality of operations; and
a processor,
wherein the processor is configured to:
suck foreign substances by driving the suction module,
collect state data related to the driving of the suction module and store the data in the memory,
identify at least one operation section corresponding to the state data among the plurality of operation sections,
identify floor characteristics of a floor surface on which the cleaning is performed by using an artificial intelligence model corresponding to the identified operation section among the plurality of artificial intelligence models, and
adjust a driving state of the suction module based on the identified floor characteristics.

2. The cleaner of claim 1,
wherein the processor is configured to:
extract characteristic information by performing a pre-processing job for the state data, and identify the at least one operation section among the plurality of operation sections based on the characteristic information, and
wherein the state data comprises:
time series data for at least one of internal pressure of the suction module, suction power, a current and a voltage necessary for driving of the suction module or a brush included in the suction module, or rotation speed of the brush, and
wherein the characteristic information comprises:
information about at least one characteristic among a variance, a standard deviation, a slope, an average value, and a change pattern for data during a predetermined unit period in the time series data.

3. The cleaner of claim 2,
wherein the memory stores a section identification model trained for identification of an operation section, and
wherein the processor is configured to:
input the state data or the characteristic information into the section identification model, and identify an operation section of the cleaner based on an output value.

4. The cleaner of claim 2,
wherein the processor is configured to:
based on there being a plurality of operation sections corresponding to the state data, input the state data or the characteristic information into each of artificial intelligence models corresponding to each operation section, and compare credibility scores of output values of each of the artificial intelligence models to identify characteristics of the floor on which the cleaning job is performed.

5. The cleaner of claim 2,
wherein the processor is configured to:
identify the floor characteristic for the first time by inputting the state data or the characteristic information into one of the plurality of artificial intelligence models,
identify a current operation section of the cleaner by using a section identification model trained for identification of an operation section, and stored in the memory, and
finally identify the floor characteristic by selectively using artificial intelligence models corresponding to the floor characteristic identified for the first time and the current operation section among the plurality of artificial intelligence models.

6. The cleaner of claim 1,
wherein the processor is configured to:
identify the floor characteristic for the first time by inputting the state data into an artificial intelligence model trained to detect floor characteristics among the plurality of artificial intelligence models, and
based on a result identified for the first time being a carpet, finally identify the floor characteristic as one of a long-pile carpet or a short-pile carpet by using an artificial intelligence model trained to identify carpet types among the plurality of artificial intelligence models.

7. The cleaner of claim 1,
wherein the plurality of operation sections comprise:
at least one of at least one first section wherein the cleaner performs cleaning while moving in a first direction, at least one second section wherein the cleaner performs cleaning while moving in a second direction opposite to the first direction, a conversion section wherein the cleaner converts from the first direction to the second direction, a conversion section wherein the cleaner converts from the second direction to the first direction, a section wherein the cleaner temporarily stops on a specific position while performing cleaning, or a section wherein the cleaner stopped on a specific position during a specific time or longer, and
wherein the floor characteristics comprise:
at least one of a lift state wherein the cleaner is separated from the floor surface, a hard floor, a corner point of a hard floor, a long-pile carpet, a short-pile carpet, or a mat.

8. An operating method of a cleaner comprising a suction module, the method comprising:
sucking foreign substances by driving the suction module;
collecting state data related to the driving of the suction module and storing the data;
identifying at least one operation section corresponding to the state data among a plurality of operation sections that divided operations of the cleaner used in cleaning into a plurality of operations, and identifying floor characteristics of a floor surface on which the cleaning is performed by using an artificial intelligence model corresponding to the identified operation section among a plurality of artificial intelligence models trained in advance to correspond to each of the plurality of operation sections and stored; and
adjusting a driving state of the suction module based on the identified floor characteristics.

9. The operating method of claim 8,
wherein the identifying the floor characteristics comprises:
extracting characteristic information by performing a pre-processing job for the state data; and
identifying the at least one operation section among the plurality of operation sections based on the characteristic information, and
wherein the state data comprises:
time series data for at least one of internal pressure of the suction module, suction power, a current and a voltage necessary for driving of the suction module or a brush included in the suction module, or rotation speed of the brush, and
wherein the characteristic information comprises:
information about at least one characteristic among a variance, a standard deviation, a slope, an average value, and a change pattern for data during a predetermined unit period in the time series data.

10. The operating method of claim 9,
wherein the identifying the floor characteristics comprises:
inputting the state data or the characteristic information into a section identification model trained for identification of an operation section and stored in advance; and
identifying an operation section of the cleaner based on an output value of the section identification model.

11. The operating method of claim 9,
wherein the identifying the floor characteristics comprises:
based on there being a plurality of operation sections corresponding to the state data, inputting the state data or the characteristic information into each of artificial intelligence models corresponding to each operation section; and
comparing credibility scores of output values of each of the artificial intelligence models to identify characteristics of the floor on which the cleaning job is performed.

12. The operating method of claim 9,
wherein the identifying the floor characteristics comprises:
identifying the floor characteristic for the first time by inputting the state data or the characteristic information into one of the plurality of artificial intelligence models;
identifying a current operation section of the cleaner by using a section identification model trained for identification of an operation section and stored in advance; and
finally identifying the floor characteristic by selectively using artificial intelligence models corresponding to the floor characteristic identified for the first time and the current operation section among the plurality of artificial intelligence models.

13. The operating method of claim 8,
wherein the identifying the floor characteristics comprises:
identifying the floor characteristic for the first time by inputting the state data into an artificial intelligence model trained to detect floor characteristics among the plurality of artificial intelligence models; and
based on a result identified for the first time being a carpet, finally identifying the floor characteristic as one of a long-pile carpet or a short-pile carpet by using an artificial intelligence model trained to identify carpet types among the plurality of artificial intelligence models.

14. The operating method of claim 8,
wherein the plurality of operation sections comprise:
at least one of at least one first section wherein the cleaner performs cleaning while moving in a first direction, at least one second section wherein the cleaner performs cleaning while moving in a second direction opposite to the first direction, a conversion section wherein the cleaner converts from the first direction to the second direction, a conversion section wherein the cleaner converts from the second direction to the first direction, a section wherein the cleaner temporarily stops on a specific position while performing cleaning, or a section wherein the cleaner stopped on a specific position during a specific time or longer, and
wherein the floor characteristics comprise:
at least one of a lift state wherein the cleaner is separated from the floor surface, a hard floor, a corner point of a hard floor, a long-pile carpet, a short-pile carpet, or a mat.

15. A non-transitory computer-readable recording medium storing a program for performing an identification method for a cleaner to identify floor characteristics,
wherein the identification method comprises:
based on the cleaner performing a cleaning job, collecting state data related to the cleaning job;
identifying at least one operation section corresponding to the state data among a plurality of operation sections that divided operations of the cleaner performing the cleaning job into a plurality of operations; and
identifying characteristics of a floor on which the cleaning job is performed by using an artificial intelligence model corresponding to the identified operation section among a plurality of artificial intelligence models trained in advance to correspond to each of the plurality of operation sections and stored.
